# FASCICULE DE BREVET EUROPEEN

(11) **EP 2 625 506 B1**
(45) Date de publication et mention de la délivrance du brevet: **17.09.2014**
(21) Numéro de dépôt: 11767432.5
(22) Date de dépôt: 07.10.2011
(51) Int. Cl.: G01N 21/65, G01N 21/95, G01N 21/03

(54) **CHAMBRE D'ILLUMINATION POUR SPECTROSCOPIE RAMAN**
BELEUCHTUNGSKAMMER FÜR RAMANSPEKTROSKOPIE
ILLUMINATION CHAMBER FOR RAMAN SPECTROSCOPY

(30) Priorité: 07.10.2010 FR 1058167
(43) Date de publication de la demande: 14.08.2013
(73) Titulaire: Assistance Publique Hôpitaux De Paris, 75004 Paris 4 (FR)
(72) Inventeur: BOURGET, Philippe, F-94160 Saint Mandé (FR); CASSARD, Bruno, F-94120 Fontenay sous Bois (FR)
(74) Mandataire: Flesselles, Bruno F.G.
(86) Numéro de dépôt international: PCT/EP2011/067533
(87) Numéro de publication internationale: WO 2012/045853

(56) Documents cités:
- WO-A1-2009/147252
- WO-A1-2011/015228
- US-A- 3 556 659
- US-A1- 2004 160 601

## Description

L'invention se rapporte au domaine du contrôle de la nature d'échantillons par spectroscopie Raman. En particulier, l'invention est particulièrement utilisable pour le Contrôle Qualité Analytique (CQA) de produits préparés de façon extemporanée dans des pharmacies hospitalières.

La « certification des Objets Thérapeutiques (OT) » via le concept du CQA libératoire *in situ,* vise en effet à garantir les paramètres, identité, pureté et concentration des molécules d'intérêt. Ces produits peuvent être à forte valeur ajoutée (par exemple des anticorps monoclonaux), ou demander des précautions d'utilisation (par exemple une cytotoxicité pour les produits destinés aux chimiothérapies).
Dans le meilleur des cas, cette analyse doit être rapide (résultat en quelques minutes et avant perfusion au patient), sans conséquence pour l'échantillon, et sans qu'il soit nécessaire de prélever de l'échantillon à fin de contrôle (certains échantillons ne pouvant être prélevés sans être détruits).

Dans cette optique, la spectroscopie Raman présente un certain nombre d'avantages :
- respect de l'intégrité de l'objet thérapeutique : aucun soutirage ni destruction d'échantillon
- analyse directe/extemporanée et au travers des parois de l'objet thérapeutique
- analyses conduites dans les conditions ambiantes
- obtention simultanée des signatures spectrales des enveloppes, véhicules, molécules d'intérêt
- grande rapidité (< 2 min)/flexibilité fonctionnelle compatible avec les principes du CQA libératoire *i.e.* avant juste avant administration de l'OT au patient. Cette rapidité de réponse permet aussi de re-préparer un OT déclaré « non-conforme »
- pas d'utilisation de consommables ou de génération de déchets de production : préservation environnementale et développement durable
- spécificité remarquable (impose une expertise analytique)
- mise en oeuvre relativement simple, par rapport aux méthodes séparatives de référence
- investissement financier relativement faible (quelques dizaines de milliers d'euros)
- faible coût de maintenance : peu de pièces mobiles, moteurs...
- taille de l'équipement la rendant utilisable en CPCI (Centrale de Production hospitalière ou non des Injectables ou des Chimiothérapies)
- Champ d'application potentiellement très vaste
- L'eau ne diffuse pratiquement ∼pas en spectroscopie Raman, la rendant utile comme « spectre témoin »

Le recours à la technologie Raman autorise aussi à identifier, et toujours sans intrusion, le véhicule (NaCl 0,9 %, G5 %, eau ppi...) portant la molécule d'intérêt.

Le principe de la spectroscopie Raman est le suivant : les radiations d'une source monochromatique (laser) puissante sont conduites dans une fibre optique, et focalisées sur l'échantillon à analyser, provoquant ainsi son excitation. La lumière diffusée par l'échantillon est recueillie par un capteur, puis acheminée par une fibre optique jusqu'au séparateur (monochromateur). Couplé à un détecteur celui-ci fournit alors des données sur l'échantillon qui n'ont plus qu'à être traitées informatiquement. On collecte en général la lumière diffusée soit à 180°, soit à 90°.
Par comparaison avec des spectres de référence, on est ainsi capable de caractériser la nature du produit présent dans l'échantillon, sa concentration, ainsi que la présence d'éventuelles impuretés.
Il s'agit d'une technique de mesure locale : le faisceau laser est focalisé sur une petite partie de l'échantillon, et permet d'étudier les propriétés de cet échantillon sur un volume de quelques microns cube.
Cette technologie a déjà été utilisée pour l'analyse de gélules, ou solutions injectables, et notamment directement dans des bouteilles en plastique.

La problématique particulière qui se pose en milieu hospitalier pour la mise en oeuvre du CQA est la diversité des Objets Thérapeutiques à étudier, tant dans leur composition que dans la nature et la forme du contenant. En effet, ces Objets Thérapeutiques, lorsqu'il s'agit de solutions injectables peuvent se présenter dans des seringues (de volumes variés), de poches de perfusions, de bouteilles, de béchers ou récipients similaires, d'ampoules, ou d'infuseurs portables.
Les infuseurs portables sont des dispositifs légers et jetables pour permettre une perfusion lente et continue de chimiothérapie. Le produit de chimiothérapie est contenu dans un réservoir ballon souple, qui est lui-même placé à l'intérieur d'une enveloppe rigide.
La grande variété des Objets Thérapeutiques et de leur géométrie nécessite de disposer d'un système permettant d'appliquer la méthode de spectroscopie Raman à ces objets, de façon aisée. Par ailleurs, les pharmacies hospitalières préparant de multiples Objets Thérapeutiques, il est nécessaire de pouvoir substituer un objet à un autre rapidement, sans que le paramétrage de la source lumineuse d'excitation ne soit difficile à effectuer. Enfin, il convient également de protéger les opérateurs de toute exposition éventuelle au faisceau laser ou à la lumière diffusée.

Le document WO2009/147252-A1 divulgue une chambre pour analyse d'un échantillon par spectroscopie Raman comprenant une source de lumière et une module de réception.

L'invention se rapporte ainsi à une chambre pour l'analyse d'un échantillon par spectroscopie Raman, caractérisée en ce qu'elle se présente sous la forme d'un parallélépipède opaque, présentant
(a) une trappe d'introduction d'un échantillon, sur une de ses parois verticales,
(b) un premier orifice et des moyens de fixation (4) d'une source de lumière pour fournir un rayonnement d'excitation et d'une lentille permettant la convergence du rayonnement d'excitation afin de définir un point de focalisation du rayonnement d'excitation, sur la paroi inférieure
(c) un second orifice et des moyens de fixation d'un capteur permettant de détecter la lumière diffusée Raman, sur une paroi verticale ou sur la paroi inférieure
lesdits moyens de fixation (4) comprenant des moyens de réglage (8) permettant de faire varier ledit point de focalisation du rayonnement d'excitation sur un axe vertical, afin de permettre un réglage de la hauteur dudit point de focalisation au sein de la chambre d'analyse.

Les termes « verticale », « inférieure » sont liés à la façon dont la chambre est préférentiellement mise en place lors de son utilisation pour analyser un échantillon. De fait, ceci signifie clairement que la trappe d'introduction d'un échantillon est localisée sur une première paroi. Le premier orifice et les moyens de fixation (4) d'une source de lumière pour fournir un rayonnement d'excitation et d'une lentille (22) permettant la convergence du rayonnement d'excitation afin de définir un point de focalisation du rayonnement d'excitation sont localisés sur une seconde paroi qui est donc perpendiculaire à la première paroi.
Le second orifice et les moyens de fixation d'un capteur permettant de détecter la lumière diffusée Raman sont localisés sur une paroi, qui n'est pas parallèle (en vis-à-vis) à la seconde paroi.

Dans ce mode de réalisation, la source lumineuse (tête de laser) et la lentille sont localisées sur la paroi inférieure de la chambre selon l'invention. La lumière est ainsi envoyée du bas vers le haut. Ce mode de réalisation est préféré car il permet de caractériser l'échantillon qui est posé sur la sole de la paroi inférieure, au dessus du premier orifice.
Toutefois, dans d'autres modes de réalisations qui font également partie de l'invention, il est possible d'implanter la tête du laser sur un flanc (le premier orifice étant alors dans une paroi latérale de la chambre), ceci revenant en fait à « tourner » la chambre lors de son utilisation. On peut également implanter plusieurs têtes de laser, pour l'acquisition de données Raman dans différents points de l'échantillon. Dans ce cas, il convient toutefois de vérifier que qu'il n'y ait pas d'interférences entre les différents détecteurs, afin que chacun d'entre eux détecte la lumière diffusée après excitation par une tête spécifique.

Ainsi qu'on l'a vu, la spectroscopie Raman revient à collecter et analyser la lumière diffusée par l'échantillon après excitation, généralement à 90° ou 180° de l'axe du faisceau laser d'excitation.
Dans un mode de réalisation préféré, le second orifice est confondu avec le premier orifice. Dans ce mode de réalisation, on collecte la lumière diffusée à 180°. Dans ce mode de réalisation, les moyens de fixation (4) et les moyens de fixation dudit capteur sont également confondus. Ils contiennent alors deux fibres optiques (l'une amenant la lumière émise via la tête de laser, et la seconde convoyant la lumière diffusée par l'échantillon vers le monochromateur et le détecteur).

Du fait de la grande variabilité des Objets Thérapeutiques à tester, et notamment de l'épaisseur des enveloppes, il convient de pouvoir déplacer le point de focalisation de la lumière d'excitation, afin qu'il soit localisé dans l'échantillon, à environ 1 cm au dessus de l'enveloppe de l'Objet Thérapeutique. Cette distance permet notamment d'éviter les « effets de bord » liés à l'enveloppe.

Ainsi que mentionné plus haut, le laser (source de lumière monochromatique parallèle) est couplé à une lentille permettant la convergence des faisceaux lumineux en un petit volume de l'échantillon que l'on souhaite analyser. La distance entre la lentille et le point de convergence est connue de l'opérateur, et est exprimé par la focale de la lentille.
Dans un mode de réalisation, les moyens de fixation (4) permettent de déplacer de façon solidaire à la fois la source de lumière (la tête de laser) et la lentille.
Dans un autre mode de réalisation, la tête de laser est fixe par rapport à la paroi inférieure de la chambre d'analyse, et seule la lentille est mobile sur l'axe vertical.

Dans un mode de réalisation préféré, lesdits moyens de fixation (4) de ladite source de lumière et de la lentille comprennent un manchon étanche à la lumière, fixé à la paroi inférieure de la chambre.
Dans un mode de réalisation particulier, ce manchon est vissé à la paroi inférieure de la chambre d'illumination. Dans ce mode de réalisation, on peut usiner des décrochements dans la sole, pour introduire les vis, afin de maintenir la planéité de la sole après fixation du manchon.
L'étanchéité à la lumière du manchon est obtenue en réalisant celui-ci dans un matériau opaque (tel que du polycarbonate). Ceci permet à la fois d'éviter la « contamination » du faisceau lumineux par la lumière ambiante et de protéger les opérateurs.
Dans un mode de réalisation particulier, les moyens de réglage de l'ensemble mobile (qui est la source de lumière et la lentille lorsque ces deux éléments sont solidaires ou la lentille seule) comprennent une vis millimétrique. L'utilisation d'une vis millimétrique permet ainsi de déplacer sur les éléments devant être mobiles sur l'axe vertical de façon très précise. On peut ainsi utiliser une vis millimétrique permettant un positionnement au centième de millimètre. Le principe de la vis millimétrique est d'induire un mouvement de translation à partir d'un mouvement de rotation de la vis. Le pas de vis permet de définir la précision de la vis (déplacement en translation pour chaque tour de vis).
Dans un mode de réalisation préféré, cette vis est reliée à un compteur permettant de connaître le déplacement de la vis, égal à celui de l'ensemble mobile, et donc la hauteur du point de focalisation au sein de la chambre selon l'invention.

A titre d'illustration, on suppose que la focale de la lentille est de 20 mm, et que l'ensemble mobile est au ras de la sole de la chambre au point 0 du compteur. Cela implique que le point de focalisation de la lumière se trouve 20 mm au dessus de la sole.
Si l'on cherche à analyser un échantillon présent dans une enveloppe en plastique de 1 mm d'épaisseur, on va donc rechercher à obtenir la focalisation à 11 mm au dessus de la sole (environ 1 cm dans l'échantillon). On doit donc descendre l'objet mobile de 9 mm.
Si l'échantillon est présent dans une seringue présentant une épaisseur de 3 mm, on descend l'objet mobile de 7 mm.
L'homme du métier détermine ainsi le réglage à apporter à l'objet mobile en fonction de la focale de la lentille, et de la nature de l'objet thérapeutique, et notamment de l'épaisseur de l'enveloppe.

La chambre selon l'invention (chambre d'illumination Raman) peut être fixée sur un châssis comprenant des pieds.
Ce châssis peut également comprendre des moyens permettant de régler la hauteur de la chambre par rapport au châssis (par exemple des pieds réglables sur vérin à vis). Dans ce cas, il peut être avantageux que la chambre embarque des moyens de mesure de la planéité, tels qu'un niveau à bulle, afin de s'assurer que la sole est parfaitement horizontale.
Les parois de la chambre sont usinées dans tout matériau opaque. Il est à noter que les différentes parois peuvent être dans des matériaux différents. Dans un mode de réalisation préféré, on utilise, au moins pour la sole, un matériau permettant de garantir la meilleure planéité possible, en évitant au maximum les irrégularités de relief sur la sole. On peut ainsi utiliser du polycarbonate ou du matériau carbone. L'épaisseur des parois de la chambre selon l'invention est définie par l'homme du métier, est généralement supérieure à 0,5 cm et n'excède généralement pas quelques centimètres. On peut ainsi utiliser des parois en carbone d'une épaisseur de 1 cm.
L'opacité de la chambre permet d'éviter les interférences de mesure qui pourraient être dues à la lumière ambiante lors de la mise en oeuvre de la mesure de spectroscopie Raman. Elle permet également de protéger les opérateurs.

La trappe d'introduction de l'échantillon dans la chambre selon l'invention peut être de toute sorte. Il est toutefois important qu'elle préserve l'opacité de la chambre une fois refermée. On peut donc prévoir un joint pour ce faire.
La trappe peut ainsi coulisser en guillotine le long d'une paroi latérale (du haut vers le bas ou du bas vers le haut). Elle peut également être ouverte via un système de charnières, ou une crémaillère (motorisée ou non). On peut également envisager des systèmes de rappel (tels que des ressorts) permettant d'assister l'opérateur pour refermer cette trappe après mise en place de l'échantillon. Elle peut être fixée en position fermée par tout moyen (aimant, crochet...).
L'invention se rapporte également à un procédé d'analyse d'un échantillon présent dans une enveloppe comprenant les étapes consistant à
(a) placer ledit échantillon sur la sole de la chambre selon l'invention, à la verticale dudit premier orifice et en regard dudit second orifice,
(b) actionner les moyens de réglage (8) afin de positionner le point de focalisation du rayonnement d'excitation dans l'échantillon à environ 1 cm au dessus de ladite enveloppe,
(c) émettre ledit rayonnement d'excitation et détecter la lumière diffusée Raman.

Il est clair que le rayonnement d'excitation est émis par l'intermédiaire d'une source de lumière fixée sur les moyens de fixation (4).
La détection de la lumière diffusée Raman est évidemment effectuée par l'intermédiaire d'un capteur fixé sur les moyens de fixation d'un capteur de ladite chambre.

Ainsi que l'on a vu, ce procédé est particulièrement utile lorsque ledit échantillon est une solution liquide, et que ladite enveloppe est choisie parmi une seringue, une poche à perfusion, une bouteille, un bécher ou récipient similaire, une ampoule, un infuseur portable.
Dans un autre mode de réalisation, on met en oeuvre le procédé avec un échantillon est solide, ladite enveloppe étant choisie parmi une gélule, une capsule, un enrobage solide.
Il est toutefois également possible de mettre en oeuvre ce procédé sur des échantillons solides sans enveloppe, et notamment des comprimés. Ce mode de réalisation est également compris dans le cadre de l'invention.

Dans un mode de réalisation, le rayonnement d'excitation est émis pendant une durée comprise entre 1 seconde et une minute.
La durée d'excitation est définie par l'opérateur et dépend notamment de la puissance du laser, et de la nature de l'échantillon à analyse.
Afin d'augmenter la qualité de l'analyse, on soumet souvent l'échantillon à plusieurs rayonnements d'excitation, et on prend la moyenne des données recueillies pour chaque excitation.

Il est à noter que la présente invention couvre également l'utilisation de la spectroscopie Raman, en général, pour caractériser le contenu d'un infuseur portable.
L'invention couvre également l'utilisation de la spectroscopie Raman, en général, pour caractériser un anticancéreux, ainsi que décrit dans les exemples.

### Description des Dessins

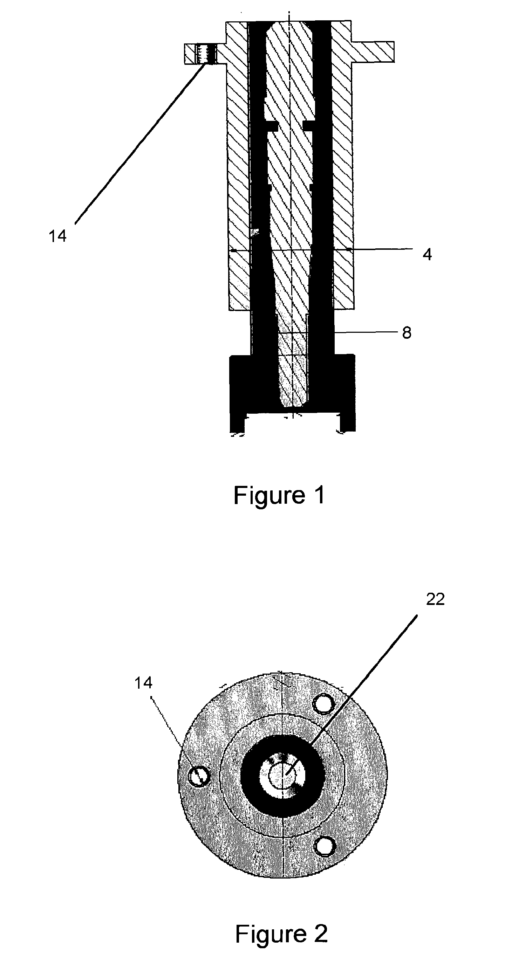

La **Figure 1** représente une vue en coupe d'un mode de réalisation de moyens de fixation et réglage selon l'invention. On voit les moyens de fixation de la source lumineuse (4), se présentant sous la forme d'un manchon, ainsi que les moyens de réglage (8) se présentant sous la forme d'une vis millimétrique. Un trou (14) permettant la fixation avec une vis est également visible.
La **Figure 2** représente une vue de dessus des moyens illustrés Figure 1. On voit bien les trois trous de vis (14), ainsi que la localisation de la lentille (22). La source lumineuse est localisée derrière la lentille (22). Le capteur peut également être localisé au même endroit que la lentille (22).

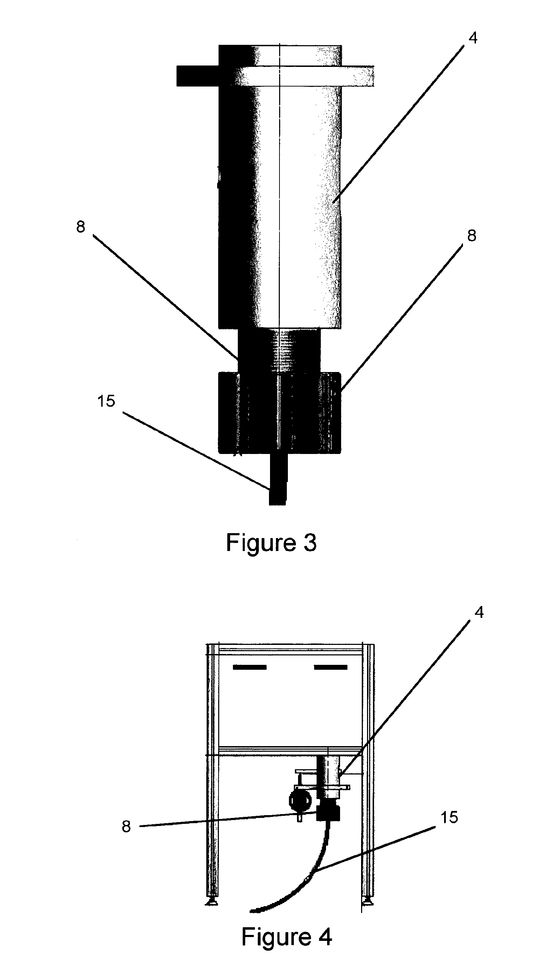

La **Figure 3** montre une vue générale de moyens de fixation (4) et de réglage (8) applicable selon l'invention. On voit la vis millimétrique (8) (molette et pas de vis) ainsi qu'un manchon (4) contenant la tête de laser, la lentille (22) et éventuellement le capteur. La gaine de la fibre optique (15) permettant l'arrivée de la lumière dans la tête de laser à partir de la source d'énergie est également représentée. Elle peut aussi contenir une seconde fibre optique permettant de transférer la lumière diffusée reçue par le capteur au monochromateur et au détecteur.
La **Figure 4** représente une chambre selon l'invention. Les moyens de fixation (4) et de réglage (8), fixés sur la paroi inférieure de la chambre sont représentés, ainsi que la gaine de fibre optique (15).

### Exemples

### Exemple I -Application aux oxazaphosphorines (ifosfamide)

### Mode opératoire

Matériel : Spectromètre Raman RXN1 785 nm Kaiser Optical®
Laser : 785 nm - puissance 450 mW

Durée d'acquisition : 1 min ( chambre )
- 5 points de gamme (0 - 1 - 5 - 10 - 15 - 20 mg/mL) (3x)
- 3 CQs (2 - 8 - 16 mg/mL) (6x)
- 3 poches pour perfusion (2 - 4 - 6 mg/mL) (3x)
- Deux solvants de dilution : NaCl 0,9 % et G 5 %
Validation sur 3 j
Protocole HPLC : identique (mêmes échantillons)

### Résultats

On obtient une gamme d'intensité de pics linéaire en fonction de la concentration (1 à 20 mg/mL) ; r² > 0,99 (n = 9) ; pente significative (P < 0,001 - Test F)
La variation des pentes des gammes étalon < 5 %, et on observe une reproductibilité des données intra-jour et inter-jour.

Ces résultats montrent que cette technologie est applicable aux oxazaphosphorines.

### Exemple II - Application aux anthracyclines (ifosfamide)

On utilise le même matériel qu'à l'exemple 1.

Application de la Spectroscopie Raman (SR) au CQA de seringues de doxorubicine et d'épirubicine, en véhicule NaCl 0,9 % ou Glucose 5 %.
Ces molécules présentent une épimérisation : inversion de configuration stérique du 4ème carbone de la fraction glucidique et des spectres UV : identiques (λmax 254 nm)
Les résultats obtenus montrent que la spectroscopie Raman permet de mesurer la concentration des deux produits en solution, quel que soit le véhicule utilisé, avec une bonne linéarité.
Par ailleurs, deux longueurs d'ondes caractéristiques (465 cm⁻¹ et 350 cm⁻¹) sont observables pour la doxorubicine, permettant de la différentier de l'épirubicine.
La nature des spectres observés permet également de différencier le véhicule utilisé.

### Exemple III - Application aux infuseurs portables

On utilise le même matériel qu'à l'exemple 1.
La problématique des infuseurs portables est qu'il est impossible de prélever l'échantillon une fois introduit dans l'infuseur sans détruire l'infuseur. Par ailleurs, la présence de deux enveloppes entourant l'échantillon diminue la force du signal d'excitation (chaque enveloppe absorbant une partie de l'énergie d'excitation).
On a pu montrer que malgré la présence des deux enveloppes, la spectrométrie Raman permet de qualifier la nature du produit contenu dans les infuseurs portables.

## Revendications

1. Chambre pour analyse d'un échantillon par spectroscopie Raman, **caractérisée en ce qu'**elle se présente sous la forme d'un parallélépipède opaque, présentant, lors de son utilisation pour analyser un échantillon,
(a) sur une de ses parois verticales, une trappe d'introduction dudit échantillon,
(b) sur la paroi inférieure, un premier orifice et des moyens de fixation (4) d'une source de lumière pour fournir un rayonnement d'excitation et d'une lentille (22) permettant la convergence du rayonnement d'excitation afin de définir un point de focalisation du rayonnement d'excitation
(c) un second orifice et des moyens de fixation d'un capteur permettant de détecter la lumière diffusée Raman, sur une paroi verticale ou sur la paroi inférieure
lesdits moyens de fixation (4) comprenant des moyens de réglage (8) permettant de faire varier ledit point de focalisation du rayonnement d'excitation sur un axe vertical, afin de permettre un réglage de la hauteur dudit point de focalisation au sein de la chambre d'analyse.

2. Chambre d'analyse selon la revendication 1, **caractérisée en ce que** le second orifice est confondu avec le premier orifice.

3. Chambre d'analyse selon la revendication 1 ou 2, **caractérisée en ce que** lesdits moyens de fixation (4) permettent de déplacer de façon solidaire à la fois la ladite source de lumière et ladite lentille (22) permettant la convergence du rayonnement d'excitation au point de focalisation.

4. Chambre d'analyse selon la revendication 1 ou 2, **caractérisée en ce que** lesdits moyens de fixation (4) permettent de déplacer ladite lentille (22) permettant la convergence du rayonnement d'excitation au point de focalisation, ladite source de lumière étant fixe par rapport à la paroi inférieure de la chambre d'analyse.

5. Chambre d'analyse selon l'une des revendications 1 à 4, **caractérisée en ce que** lesdits moyens de fixation (4) de ladite source de lumière et de ladite lentille (22) comprennent un manchon étanche à la lumière, fixé à la paroi inférieure de la chambre.

6. Chambre d'analyse selon l'une des revendications 1 à 5, **caractérisée en ce que** lesdits moyens de réglage (8) permettant la variation du point de focalisation du rayonnement d'excitation comprennent une vis millimétrique.

7. Procédé d'analyse d'un échantillon présent dans une enveloppe comprenant les étapes consistant à
(a) placer ledit échantillon sur la sole de la chambre selon l'une des revendications 1 à 6, à la verticale dudit premier orifice et en regard dudit second orifice,
(b) actionner les moyens de réglage (8) afin de positionner le point de focalisation du rayonnement d'excitation émis par l'intermédiaire d'une source de lumière fixée sur les moyens de fixation (4) dans l'échantillon à environ 1 cm au dessus de ladite enveloppe,
(c) émettre ledit rayonnement d'excitation et détecter la lumière diffusée Raman, par l'intermédiaire d'un capteur fixé sur les moyens de fixation d'un capteur de ladite chambre.

8. Procédé selon la revendication 7, **caractérisé en ce que** ledit échantillon est une solution liquide, et que ladite enveloppe est choisie parmi une seringue, une poche à perfusion, une bouteille, un bécher ou récipient similaire, une ampoule, un infuseur portable.

9. Procédé selon la revendication 7, **caractérisé en ce que** ledit échantillon est solide et que ladite enveloppe est choisie parmi une gélule, une capsule, un enrobage solide.

10. Procédé selon l'une des revendications 8 à 9, **caractérisé en ce que** ledit rayonnement d'excitation est émis pendant une durée comprise entre une seconde et une minute.

## Patentansprüche

1. Kammer zur Analyse einer Probe durch Raman-Spektroskopie, **dadurch gekennzeichnet, dass** sie in Form eines opaken Parallelepipeds vorliegt, das bei seiner Verwendung zur Analyse einer Probe aufweist
(a)an einer seiner senkrechten Wände eine Einführklappe für die Probe,
(b)an der unteren Wand eine erste Öffnung und Einrichtungen (4) zur Befestigung einer Lichtquelle, um eine Anregungsstrahlung zu liefern, und einer Linse (22), die die Konvergenz der Anregungsstrahlung erlaubt, um einen Fokussierpunkt der Anregungsstrahlung zu definieren,
(c)eine zweite Öffnung und Befestigungseinrichtungen eines Sensors, der es ermöglicht, das gestreute Raman-Licht zu erfassen, an einer senkrechten Wand oder an der unteren Wand,
wobei die Befestigungseinrichtungen (4) Einstelleinrichtungen (8) enthalten, die es ermöglichen, den Fokussierpunkt der Anregungsstrahlung auf einer senkrechten Achse zu verändern, um eine Einstellung der Höhe des Fokussierpunkts in der Analysekammer zu erlauben.

2. Analysekammer nach Anspruch 1, **dadurch gekennzeichnet, dass** die zweite Öffnung mit der ersten Öffnung zusammenfällt.

3. Analysekammer nach Anspruch 1 oder 2, **dadurch gekennzeichnet, dass** die Befestigungseinrichtungen (4) es ermöglichen, die Lichtquelle und die Linse (22) fest miteinander verbunden gleichzeitig zu verschieben, was die Konvergenz der Anregungsstrahlung zum Fokussierpunkt erlaubt.

4. Analysekammer nach Anspruch 1 oder 2, **dadurch gekennzeichnet, dass** die Befestigungseinrichtungen (4) es ermöglichen, die Linse (22) zu verschieben, was die Konvergenz der Anregungsstrahlung zum Fokussierpunkt erlaubt, wobei die Lichtquelle bezüglich der unteren Wand der Analysekammer ortsfest ist.

5. Analysekammer nach einem der Ansprüche 1 bis 4, **dadurch gekennzeichnet, dass** die Befestigungseinrichtungen (4) der Lichtquelle und der Linse (22) eine lichtdichte Muffe enthalten, die an der unteren Wand der Kammer befestigt ist.

6. Analysekammer nach einem der Ansprüche 1 bis 5, **dadurch gekennzeichnet, dass** die die Veränderung des Fokussierpunkts der Anregungsstrahlung ermöglichenden Einstelleinrichtungen (8) eine Millimeterschraube enthalten.

7. Verfahren zur Analyse einer in einer Hülle vorhandenen Probe, das die Schritte enthält, die darin bestehen
(a)Anordnen der Probe auf dem Boden der Kammer nach einem der Ansprüche 1 bis 6, senkrecht zur ersten Öffnung und gegenüber der zweiten Öffnung,
(b)Betätigen der Einstelleinrichtungen (8), um den Fokussierpunkt der mittels einer an den Befestigungseinrichtungen (4) befestigten Lichtquelle emittierten Anregungsstrahlung in der Probe auf etwa 1 cm oberhalb der Hülle zu positionieren,
(c)Emittieren der Anregungsstrahlung und Erfassen des gestreuten Raman-Lichts mittels eines Sensors, der an den Befestigungseinrichtungen eines Sensors der Kammer befestigt ist.

8. Verfahren nach Anspruch 7, **dadurch gekennzeichnet, dass** die Probe eine flüssige Lösung ist, und dass die Hülle ausgewählt wird unter einer Spritze, einem Infusionsbeutel, einer Flasche, einem Becher oder ähnlichem Behälter, einer Ampulle, einer tragbaren Infusionsvorrichtung.

9. Verfahren nach Anspruch 7, **dadurch gekennzeichnet, dass** die Probe fest ist und die Hülle ausgewählt wird unter einer Hartkapsel, einer Kapsel, einer festen Umhüllung.

10. Verfahren nach einem der Ansprüche 8 bis 9, **dadurch gekennzeichnet, dass** die Anregungsstrahlung während einer Dauer emittiert wird, die zwischen einer Sekunde und einer Minute liegt.

## Claims

1. Chamber for analyzing a sample by Raman spectroscopy, **characterized in that** it takes the form of an opaque parallelpiped, having, during its use for analyzing a sample,
(a) on one of its vertical walls, a hatch for introducing said sample,
(b) on the bottom wall, a first orifice and means (4) for fastening a light source to supply an excitation radiation and a lens (22) allowing for the convergence of the excitation radiation in order to to define a focal point of the excitation radiation,
(c) a second orifice and means for fastening a sensor making it possible to detect the Raman scattered light, on a vertical wall or on the bottom wall,
said fastening means (4) comprising adjustment means (8) making it possible to vary said focal point of the excitation radiation on a vertical axis, in order to allow for an adjustment of the height of said focal point within the analysis chamber.

2. Analysis chamber according to Claim 1, **characterized in that** the second orifice is combined with the first orifice.

3. Analysis chamber according to Claim 1 or 2, **characterized in that** said fastening means (4) make it possible to move, together, both said light source and said lens (22) allowing for the convergence of the excitation radiation at the focal point.

4. Analysis chamber according to Claim 1 or 2, **characterized in that** said fastening means (4) make it possible to move said lens (22) allowing for the convergence of the excitation radiation at the focal point, said light source being fixed relative to the bottom wall of the analysis chamber.

5. Analysis chamber according to one of Claims 1 to 4, **characterized in that** said fastening means (4) of said light source and of said lens (22) comprise a light-tight sleeve, fastened to the bottom wall of the chamber.

6. Analysis chamber according to one of Claims 1 to 5, **characterized in that** said adjustment means (8) allowing for the variation of the focal point of the excitation radiation comprise a millimetric screw.

7. Method for analying a sample present in a container comprising the steps of
(a) placing said sample on the base plate of the chamber according to one of Claims 1 to 6, vertical to said first orifice and facing said second orifice,
(b) actuating the adjustment means (8) in order to position the focal point of the excitation radiation emitted via a light source fixed to the fastening means (4) in the sample at approximately 1 cm above said container,
(c) emitting said excitation radiation and detecting the Raman scattered light, avia a sensor fixed to the fastening means of a sensor of said chamber.

8. Method according to Claim 7, **characterized in that** said sample is a liquid solution, and that said container is chosen from a syringe, a perfusion bag, a bottle, a beaker or similar vessel, an ampoule, a portable infuser.

9. Method according to Claim 7, **characterized in that** said sample is solid and that said container is chosen from a gelatine capsule, a capsule, a solid cladding.

10. Method according to either of Claims 8 and 9, **characterized in that** said excitation radiation is emitted for a duration of between one second and one minute.
